(19) Europäisches Patentamt

European Patent Office

Office européen des brevets

(11) **EP 0 840 054 B1**

(12) **EUROPÄISCHE PATENTSCHRIFT**

(45) Veröffentlichungstag und Bekanntmachung des Hinweises auf die Patenterteilung:
**01.12.2004 Patentblatt 2004/49**

(51) Int Cl.⁷: **F17C 1/16**, B21D 26/02

(21) Anmeldenummer: **97118668.9**

(22) Anmeldetag: **28.10.1997**

(54) **Verbundbehälter für Gase**

Composite container for gases

Récipient composite pour des gaz

(84) Benannte Vertragsstaaten:
**AT BE DE FR GB IT NL SE**

(30) Priorität: **04.11.1996 DE 19645442**

(43) Veröffentlichungstag der Anmeldung:
**06.05.1998 Patentblatt 1998/19**

(73) Patentinhaber: **Messer Griesheim GmbH
65933 Frankfurt am Main (DE)**

(72) Erfinder:
• **Kesten, Martin, Dr.
51503 Rösrath (DE)**
• **Meyer, Gesa
41542 Dormagen (DE)**

(56) Entgegenhaltungen:
**EP-A- 0 243 663        EP-A- 0 303 016
GB-A- 1 159 972        US-A- 3 240 644
US-A- 4 042 421**

**Beschreibung**

Die Erfindung betrifft eine Hochdruckbefüllung von Verbundbehälter nach Anspruch 1.

Um die Energiegase Wasserstoff und Erdgas als alternative Kraftstoffe effizient einsetzen zu können, sind neue Druckbehälter erforderlich, die bei sehr geringem Eigengewicht das Gas mit sehr hohem Druck speichern können.

Da dieses Problem mit herkömmlichen, metallischen Druckbehälterwerkstoffen nicht mehr zu lösen ist, werden in zunehmendem Umfang Druckbehälter aus Faserverbundwerkstoffen entwickelt und hergestellt. Diese Materialien haben selbst eine sehr niedrige Dichte und können in Faserrichtung sehr hohe Kräfte übertragen. Nach diesem Prinzip hergestellte Druckgasbehälter bestehen aus einer hauptsächlich für die Gasdichtheit verantwortlichen Hülle (Liner), die je nach Konzept vollständig oder nur im zylindrischen Teil von einer Faser-/Harzkombination umgeben ist, welche für die zur Aufnahme des Innendrucks notwendige Festigkeit sorgt.

Die typischen Drücke, mit denen Gase in derartigen nicht isolierten Behältern gespeichert werden, liegen aber nur zwischen 200 und 300 bar, jedoch wären höhere Drücke und damit höhere Speicherwirkungsgrade der Verbundbehälter wünschenswert.

Der Grund dafür, daß dieser Weg bis heute in einem nennenswerten Umfang nicht beschritten werden kann, liegt in dem hohen technischen Aufwand, der für die Kompression der Gase auf die erforderlichen Drücke betrieben werden muß.

Der Erfindung liegt daher die Aufgabe zugrunde, eine Hochdruckbefüllung für Verbundbehälter zu schaffen, mittels denen Gas mit einem höheren Druck gespeichert werden kann, wobei der technische Aufwand für die Kompression verringert werden soll.

Ausgehend von dem im Oberbegriff des Anspruchs berücksichtigten Stand der Technik wird diese Aufgabe erfindungsgemäß durch die Merkmale des Anspruchs 1 gelöst.

Durch die Erfindung können höhere Speicherdrücke (größer 300 bar) realisiert werden, die den Speicherwirkungsgrad des Verbundbehälters durch die höhere Dichte des komprimierten Gases erkennbar verbessern.

Kryotaugliche Verbundbehälter, die dafür geeignet sind, bestehen aus einem dünnwandigen Edelstahl-Liner, insbesondere einem Chrom-Nickel-Stahl-Liner, der, bevor er mit dem Faserverbundmaterial umgeben wird, seine endgültige Form und Werkstoffeigenschaften durch einen Kryoformprozess bei mindestens -75°C erhält. Durch diesen Herstellungsprozeß erhält der erfindungsgemäße Verbundbehälter sowohl die Festigkeits- als auch die Zähigkeitseigenschaften, die für die in der Befüllphase auftretenden, extrem niedrigen Temperaturen und die damit verbundenen lokalen Thermospannungen erforderlich sind.

Die nach herkömmlichen Verfahren aus Blechteilen durch Schweißen, Tiefziehen, Drücken oder Blasen hergestellte und mit einem Füll-/Entnahmeanschluß versehene Liner-Vorform wird dazu auf eine tiefe Temperatur, vorzugsweise die des flüssigen Stickstoffs (-196°C), abgekühlt und anschließend durch Innendruck so weit verformt, bis der Liner seine endgültige, vorbestimmte Form erreicht hat. Die Temperatur muß unterhalb der Martensitbildungstemperatur Md liegen. Dies ist die Temperatur, oberhalb der unabhängig von der Größe der mechanischen Verformung keine martensitische Umwandlung stattfindet. Unter diesen Bedingungen verfestigt sich das Material stärker, als dies bei normaler Kaltverformung der Fall ist, weil sich das Gefüge zu einem Teil in Martensit umwandelt. Der Grad der Verfestigung entspricht dabei der Menge des umgewandelten Gefüges.

Da der in Martensit umgewandelte Gefügeanteil mit sinkender Verformungstemperatur und steigendem Verformungsgrad zunimmt, erreicht man die günstigsten Verfestigungsbedingungen für die Liner, wenn der Verformungsprozess bei einer Temperatur durchgeführt wird, die deutlich unter Md liegt. Am zweckmäßigsten ist es, wenn die Verformung unterhalb der Ms-Temperatur stattfindet. Dies ist die Temperatur, bei der die Martensitumwandlung des Gefüges auch ohne gleichzeitige Verformung einsetzt. Es ist dann nur eine relativ geringe Verformung, beispielsweise ein Verformungsgrad unter 15% erforderlich, um einen ausreichend großen Anteil des Gefüges umzuwandeln und die gewünschte hohe Festigkeit zu erreichen.

Die Ms-Temperaturen der geeigneten metastabilen CrNi-Stähle lassen sich durch die bekannten Formeln von Eichelmann und Hull berechnen und liegen in der Nähe der Temperatur des flüssigen Stickstoffs. Daher erfolgt die Verformung der vorgefertigten Behälter am zweckmäßigsten, nachdem sie durch Befüllen oder Eintauchen in flüssigen Stickstoff abgekühlt worden sind. Als Medium zur Erzeugung des für die Verformung erforderlichen Innendrucks kann entweder flüssiger Stickstoff selbst oder ein bei dieser Temperatur nicht kondensierendes Gas, zum Beispiel Helium, verwendet werden. Die Höhe des anzuwendenden Drucks richtet sich nach der Linergeometrie und der angestrebten Materialfestigkeit. Art und Ausmaß der Kryoverformung werden nicht nur durch die beabsichtigte Formgebung, sondern - wie vorstehend beschrieben - auch durch die dabei sich ändernden Werkstoffeigenschaften bestimmt.

Die für ein derartiges Verfahren geeigneten Linerwerkstoffe sind die standartisierten, metastabilen austenitischen CrNi-Stähle, insbesondere die Typen 1.4301, 1.4307, 1.4306, 1.4541.

Durch den beschriebenen Kryoformprozess kann die Festigkeit dieser Werkstoffe unter Beibehaltung einer noch ausreichenden Zähigkeit bis auf über 1000 MPa gesteigert werden.

Ein derartig ausgebildeter Verbundbehälter mit kryoverformtem Liner wird erfindungsgemäß direkt mit tiefkaltem verflüssigtem Gas befüllt. Der angestrebte hohe Fülldruck stellt sich dann bei der Wiedererwärmung auf Umgebungstemperatur von selbst ein.

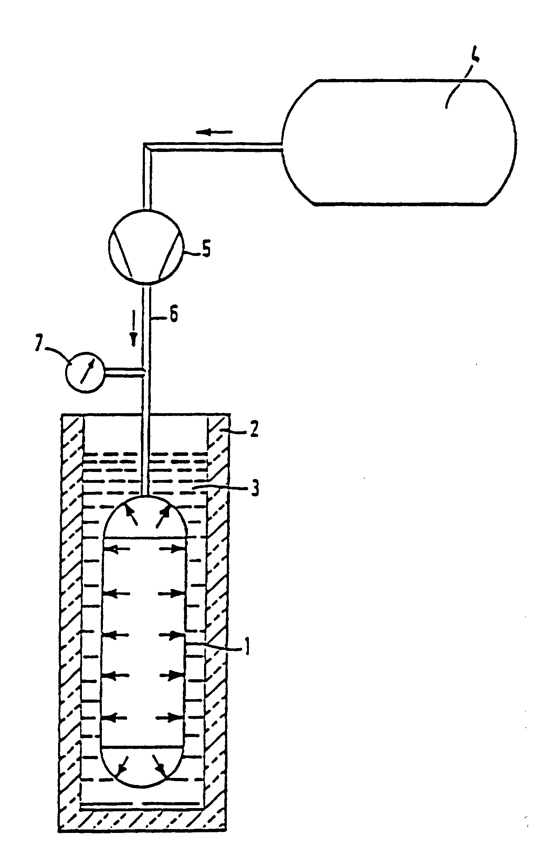

Eine Einrichtung zur Durchführung der Kryoverformung der Liner-Vorform ist in der Zeichnung dargestellt.

Der vorgefertigte Liner befindet sich in einem isolierten Kryobehälter 2, welcher mit flüssigem Stickstoff 3 gefüllt ist. Aus einem Vorratsbehälter 4 wird gasförmiges Mittel, zum Beispiel Helium, abgezogen, mittels des Kompressors 5 auf den gewünschten Verformungsdruck gebracht und durch die Leitung 6 in das Innere des vorgefertigten Liners eingeführt. Der Verformungsdruck wird mit dem Manometer 7 kontrolliert.

Wenn jedoch der spätere Verbundbehälter eine einheitliche Zylinderform aufweisen soll oder der Umwicklungsprozess dies voraussetzt, ist es möglich, die Liner-Vorform beim Kryoverformen in eine zylindrische Hohlform zu drücken. Diese an beiden Enden offene zylindrische Aufnahme begrenzt die freie Verformbarkeit des Liners und stellt sicher, daß sich der Liner über seine gesamte zylindrische Länge gleichmäßig verformt. Dabei werden auch mögliche Querschnittsunterschiede durch eventuell vorhandene Rundnähte in der Liner-Vorform ausgeglichen.

Bei zylindrischen Linern mit halbkugelförmigen Böden unter innerem Überdruck tritt die höchste, für die Dimensionierung des Behälters maßgebende Spannung im zylindrischen Umfang auf.

$$\text{Sigmaumfang} = \frac{Dm \cdot p}{20 \cdot s} \text{ (MPa)}$$

Dm: Mittlerer zylindrischer Durchmesser (mm)

p: Innendruck (bar)

s: zylindrische Wanddicke (mm)

Die sich nach dieser Formel beim Kryoverformen einstellende Spannung entspricht der erzielten Materialfestigkeit $R_{p\,(Kryo)}$ (Streckgrenze bei der Verformungstemperatur). Wie Versuche mit entsprechend hergestellten Linern ergeben haben, ist diese wiederum mit der Zerreißfestigkeit des Materials bei Umgebungstemperatur $R_{m\,(RT)}$ gleichzusetzen, da sich herausgestellt hat, daß der Berstdruck der durch Kryoverformung hergestellten Liner in guter Übereinstimmung mit dem bei der Kryoverfestigung angewendeten Druck steht. Bei Kenntnis dieser Zusammenhänge ist es möglich, die herzustellenden Liner ihren betrieblichen Erfordernissen entsprechend auszulegen und in der beschriebenen Weise zu verfestigen.

Das Ergebnis ist ein Edelstahlliner, der trotz erheblich höherer Festigkeit als das Ausgangsmaterial seine Tieftemperaturtauglichkeit behalten hat.

Je nachdem für welchen Einsatz der fertige Verbundbehälter vorgesehen ist, wird der auf die beschriebene Weise hergestellte Liner nach einem Verfahren mit Glas-, Aramit- oder Kohlefaserverbundmaterial umgeben.

Der komplett umwickelte Liner kann anschließend, zwecks Optimierung des Spannungszustandes einem weiteren Verformungsprozess unter Innendruck im Sinne einer Kaltstreckung unterzogen werden. Dieser Vorgang kann je nach Anforderung bei Umgebungstemperatur oder auch bei Kryotemperaturen erfolgen.

Der so hergestellte Verbundbehälter wird direkt mit tiefkalten, verflüssigten Gas befüllt. Der angestrebte hohe Fülldruck des Gases stellt sich dann bei der Wiedererwärmung auf Umgebungstemperatur von selbst ein. Dabei werden in diesem Hochdruckbehälter Drücke größer 300 bar erzielt.

**Patentansprüche**

1. Verfahren zur Hochdruckbefüllung von Verbundbehältern mit einem Gas, **dadurch gekennzeichnet, dass** der angestrebte Fülldruck des Gases durch die direkte Befüllung des Verbundbehälters mit tiefkalt verflüssigtem Gas und anschließender Wiedererwärmung auf Umgebungstemperatur erzielt wird.

2. Verfahren nach Anspruch 1, **dadurch gekennzeichnet, dass** der Verbundbehälter eine bei einer Temperatur von mindestens minus 75°C endgeformten, dünnwandigen Stahlhülle als Liner aufweist.

3. Verfahren nach Anspruch 1, **dadurch gekennzeichnet, dass** der Verbundbehälter eine bei einer Temperatur von minus 75°C bis minus 196°C endgeformten, dünnwandigen Stahlhülle als Liner aufweist.

4. Verfahren nach Anspruch 2 oder 3, **dadurch gekennzeichnet, daß** die Stahlhülle aus einem metastabilen Chrom-Nickel-Stahl besteht.

**Claims**

1. Method for the high-pressure filling of composite containers with a gas, **characterized in that** the desired filling pressure of the gas is achieved by direct filling of the composite container with cryogenically liquefied gas followed by reheating to ambient temperature.

2. Method according to Claim 1, **characterized in that** the composite container has a thin-walled steel liner which has been net-shaped at a temperature of at least minus 75°C.

**3.** Method according to Claim 1, **characterized in that** the composite container has a thin-walled steel liner which has been net-shaped at a temperature of from minus 75°C to minus 196°C.

**4.** Method according to Claim 2 or 3, **characterized in that** the steel liner consists of a meta-stable chromium-nickel steel.

**Revendications**

**1.** Procédé de remplissage haute pression de récipients en matériau composite à l'aide d'un gaz, **caractérisé en ce que** la pression de remplissage visée du gaz est obtenue par le remplissage direct du récipient en matériau composite à l'aide d'un gaz liquéfié basse température et à l'aide d'un réchauffement subséquent à la température ambiante.

**2.** Procédé selon la revendication 1, **caractérisé en ce que** le récipient en matériau composite présente, en tant que garniture, une enveloppe en acier à paroi mince, mise sous sa forme finale à une température de minimum moins 75°C.

**3.** Procédé selon la revendication 1, **caractérisé en ce que** le récipient en matériau composite présente, en tant que garniture, une enveloppe en acier à paroi mince, mise sous sa forme finale à une température allant de moins 75°C à moins 196°C.

**4.** Procédé selon la revendication 2 ou 3, **caractérisé en ce que** l'enveloppe en acier se compose d'un acier chrome-nickel métastable.